# EUROPEAN PATENT APPLICATION

(11) **EP 4 086 982 A1**
(43) Date of publication of application: **09.11.2022**
(21) Application number: 22744638.2
(22) Date of filing: 23.03.2022
(51) Int. Cl.: H01M 4/13

(54) **POSITIVE ELECTRODE PLATE AND LITHIUM ION BATTERY**

(30) Priority: 23.03.2021 CN 202110310733
(71) Applicant: Zhuhai CosMX Battery Co., Ltd., Zhuhai, Guangdong 519180 (CN)
(72) Inventor: ZHANG, Shuanghu, Zhuhai Guangdong 519180 (CN); PENG, Ning, Zhuhai Guangdong 519180 (CN)
(74) Representative: Patentbüro Paul Rosenich AG
(86) International application number: PCT/CN2022/082551
(87) International publication number: WO 2022/199628

(57) **Abstract**

The present application provides a positive electrode plate and a lithium-ion battery. A first aspect of the present application provides a positive electrode plate, and the positive electrode plate includes a positive-electrode current collector, a functional layer, and a first safety coating; where both an upper surface and a lower surface of the positive-electrode current collector include a first coating area and a second coating area, and the first coating area is provided with the first safety coating; the second coating area is provided with the functional layer, and the functional layer sequentially includes a second safety coating and a positive-electrode active layer in a direction away from the positive-electrode current collector. The positive electrode plate provided by the present application, by arranging a first safety coating on a surface of the positive-electrode current collector, can effectively prevent the positive-electrode current collector from being in contact with a negative-electrode active layer, increase a short-circuit internal resistance in a puncturing process, prevent the temperature from rising, and improve a puncture pass rate of the lithium-ion battery.

## Description

The present application claims priority to Chinese Patent Application No. 202110310733.5 entitled "Positive Electrode Plate and Lithium-ion Battery", filed on March 23, 2021, which is hereby incorporated by reference in its entirety.

### TECHNICAL FIELD

The present application relates to a positive electrode plate and a lithium-ion battery, and relates to the technical field of lithium-ion batteries.

### BACKGROUND

With the rapid development of consumer electronics and electric vehicles, the lithium-ion battery has become an ideal power supply device thereof, and meanwhile, higher requirements have been proposed for the safety of lithium-ion battery.

According to the difference of the manufacturing processes of the lithium-ion battery, it can be divided into a lamination process and a winding process, where the winding process is to prepare a battery cell by winding a positive electrode plate, a negative electrode plate and a separator, and thus the battery cell prepared by the winding process is also referred to as a wound cell, and after the wound cell is prepared, the lithium-ion battery can be prepared through processes such as packaging, liquid injection and the like.

A common wound cell ends with a positive electrode plate, that is, the outermost layer of the wound cell is a positive-electrode current collector, and when the wound cell is punctured in a high SOC, a short-circuit is prone to occur inside it, which is likely to cause smoke and fire problems. Therefore, how to improve the puncture pass rate of the lithium-ion battery prepared by the winding process has received more and more attention.

### SUMMARY

The present application provides a positive electrode plate for improving a puncture pass rate of a lithium-ion battery.

A first aspect of the present application provides a positive electrode plate, where the positive electrode plate includes a positive-electrode current collector, a functional layer, and a first safety coating;
where both an upper surface and a lower surface of the positive-electrode current collector include a first coating area and a second coating area, and the first coating area is provided with the first safety coating; the second coating area is provided with the functional layer, and the functional layer sequentially includes a second safety coating and a positive-electrode active layer in a direction away from the positive-electrode current collector.

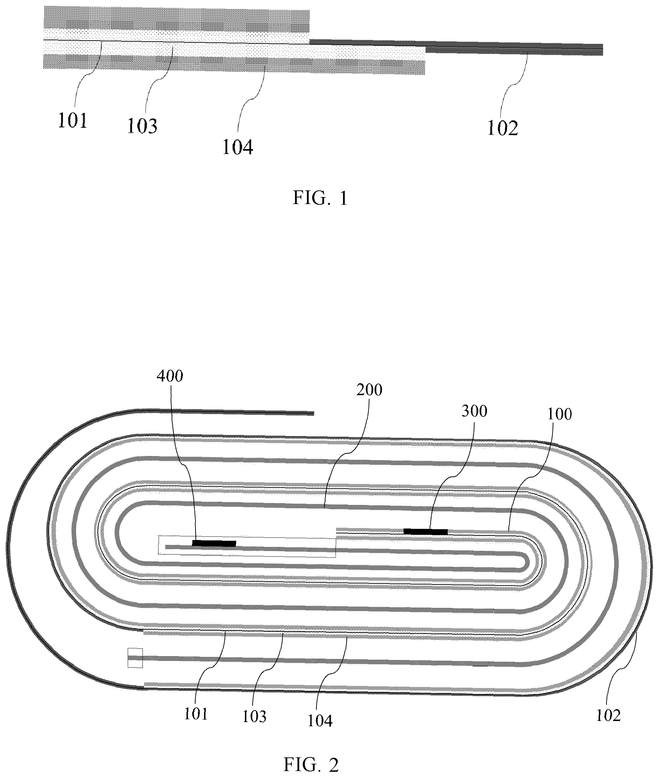

The present application provides a positive electrode plate. Due to that the contact between the positive-electrode current collector and the negative-electrode active layer is a main cause of ignition of the lithium-ion battery, the first safety coating is arranged on an exposed surface of the positive-electrode current collector in the present application, to improve the puncture pass rate of the lithium-ion battery. For example, FIG. 1 is a schematic structural diagram of a positive electrode plate according to an example of the present application. As shown in FIG. 1, both of the upper surface and the lower surface of the positive-electrode current collector 101 include a first coating area and a second coating area, the first coating area is provided with a first safety coating 102, the second coating area is provided with a functional layer, and the functional layer sequentially includes a second safety coating 103 and a positive-electrode active layer 104 in a direction away from the positive-electrode current collector, that is, the second safety coating 103 is arranged on the second coating area of the upper surface and the lower surface of the positive-electrode current collector 101 and the positive-electrode active layer 104 is arranged on a surface of the second safety coating away from the positive-electrode current collector 101. The positive electrode plate provided by the present application, by arranging the first safety coating on the surface of the positive-electrode current collector, can effectively prevent the positive-electrode current collector from being in contact with the negative-electrode active layer, increase a short-circuit internal resistance in the puncturing process, and prevent the temperature from rising, thereby improving the puncture pass rate of the lithium-ion battery.

In one embodiment, the first safety coating includes inorganic particles, and the inorganic particles are one or more of CuO, Gd₂O, Lu₂O₃, Sm₂O₃, NiO, SiO₂, Al₂O₃, TiO₂, WO₃, ZnO, Ag₂Se, MoS₂, ZrO₂, Y₂O₃, SiC, CeO₂, SnO₂, Al₂O₃/Ag/ZnO, Al₂O₃/CdS, Al₂O₃/MgO, Al₂O₃/ZnO, Al(OH)₃, Mg(OH)₂, Ca(OH)₂, Ba₂SO₄ and γ-AlOOH.

Further, D10 of the inorganic particles is 0.05-0.3µm, D50 thereof is 0.5-1.5µm, D90 thereof is less than 4.5µm, and a specific surface area thereof is 0.1-16m²/g.

When the positive electrode plate provided in the present application is used to prepare a wound cell by a winding process, taking the leftmost side of the positive electrode plate shown in FIG. 1 as a winding center, the winding is performed according to actual production needs of the wound cell, and the first safety coating is located at a position away from the winding center. For example, FIG. 2 is a schematic structural diagram of a lithium-ion battery provided by an example of the present application. As shown in FIG. 2, it includes a positive electrode plate 100, a negative electrode plate 200, and a separator (not shown), which are wound from inside to outside. It can be seen from FIG. 2 that an area of the positive-electrode current collector, which is not covered by a functional layer, is covered with the first safety coating, and the first safety coating is located on an outer layer of the wound cell. A person skilled in the art knows that during the preparation process of the lithium-ion battery, the first safety coating of the outermost layer needs to be glued to an outer shell using an adhesive tape to prevent a risk of short-circuit caused by folding of the electrode plate in a dropping process of the lithium-ion battery. Therefore, in order to further improve the drop pass rate of the lithium-ion battery, a filler with a rough surface can be selected to be added into the first safety coating so as to improve a peel strength of the first safety coating from the adhesive tape, thereby improving the drop pass rate of the lithium-ion battery, specifically:
the first safety coating includes a filler, the filler is one or more of lithium cobaltate, lithium manganate, lithium nickelate, lithium nickel cobalt manganese oxide, ferrous lithium phosphate, lithium ferromanganese phosphate, lithium vanadium phosphate, lithium oxyvanadium phosphate, lithium-rich manganese-based material, lithium nickel cobalt aluminate, lithium titanate, aluminum fiber and aluminum silicate fiber; the filler selected in the present application is a common material in the art, and has the advantages of high stability and no electrochemical reaction with an electrolyte and an active material, and meanwhile, the above-mentioned materials are easy to obtain and have economic benefits and practical application values.

According to different filler shapes, the filler is further divided into a particle filler and a fiber filler, where the particle size of the particle filler should not be too large, otherwise, it will affect the compactness of the first safety coating, thereby affecting the safety of the lithium-ion battery. Specifically, D10 of lithium cobaltate, lithium manganate, lithium nickelate, lithium nickel cobalt manganese oxide, ferrous lithium phosphate, lithium ferromanganese phosphate, lithium vanadium phosphate, lithium oxyvanadium phosphate, lithium-rich manganese-based material, lithium nickel cobalt aluminate, lithium titanate is 0.01-0.5µm, D50 of them is 0.02-1.5µm, D90 of them is 1.6-4.0µm, and a specific surface area of them is 0.1-15 m²/g; the fiber filler should also not have excessive diameter and length, otherwise, it will affect the thickness and compactness of the first safety coating; in addition, too long fiber length is also unfavorable to the dispersion of the fiber filler. Specifically, the aluminum fiber and the aluminum silicate fiber have a diameter of 0.1-3 µm, and a length of 1-20µm.

It was found through further researches that with continuous increase of the mass fraction of the filler in the first safety coating, the puncture pass rate of the lithium-ion battery is reduced. Therefore, in order to take into account both the puncture pass rate and the drop pass rate of the lithium-ion battery, the mass of the filler is not greater than 40% of the mass of the first safety coating.

Furthermore, the present application tested the peel strength between the first safety coating and the fixing adhesive tape, and the test results show that a peel force between the first safety coating and the fixing adhesive tape is 3-30 N/m. When the first safety coating includes the above-mentioned filler, the peel force between the first safety coating and the fixing adhesive tape can be further improved, increasing the drop pass rate of the lithium-ion battery, and improving the safety.

In addition, thermal runaway is also one of the important factors affecting the safety of the lithium-ion battery, and in order to further improve the safety of the lithium-ion battery, the first safety coating may also include a conductive agent; the conductive agent is a common material in the art, and has good thermal conductivity, and when thermal runaway occurs in the lithium-ion battery, the conductive agent can prevent the heat from accumulating, thereby reducing a local temperature of the lithium-ion battery and improving the safety of the lithium-ion battery; moreover, due to the fact that the particle size of the conductive agent is at nanometer level, its specific surface area is high, and has many pore that can effectively absorb the electrolyte between the lithium-ion battery cell and the shell and improve the injection efficiency of the electrolyte, addition of the conductive agent to the first safety coating helps to prevent the accumulation of the internal temperature of the lithium-ion battery and improve the safety of the lithium-ion battery. However, the content of the conductive agent should not be too high, otherwise it will affect the internal resistance of the first safety coating and reduce the puncture pass rate of the lithium-ion battery. Therefore the content of the conductive agent needs to be controlled so that a total volume internal resistance of the first safety coating and the positive-electrode current collector is 10-3500mQ, and further, the total volume internal resistance of the first safety coating and the positive-electrode current collector is 20-3500mQ. The total volume internal resistance refers to a volume internal resistance of the first safety coating and the positive-electrode current collector as a whole. During test, an ACCFILM diaphragm resistance test system is used for resistance testing, where the positive electrode plate including the first safety coating is placed between test probes for testing.

The conductive agent may be a conventional material in the art, for example, the conductive agent is one or more of carbon black, carbon fiber, carbon nanotube, graphite, graphene, metal powder, composite conductive material, and conductive ceramic powder.

A person skilled in the art can select the material of the first safety coating according to actual needs. For example, the first safety coating includes an inorganic particle; or includes an inorganic particle and a conductive agent; or includes an inorganic particle and a filler; or includes an inorganic particle, a conductive agent and a filler. In addition, in order to bond the first safety coating to the positive-electrode current collector, the first safety coating further includes a binder. Specifically, the binder is selected from one or more of polyvinylidene fluoride, copolymer of vinylidene fluoride-hexafluoropropylene, polyamide, polyacrylonitrile, polyacrylic acid ester, polyacrylic acid, polyacrylic acid salt, sodium carboxymethyl cellulose, polyvinyl pyrrolidone, polyvinyl ether, polymethyl methacrylate, polytetrafluoroethylene, polyhexafluoropropylene, styrene butadiene rubber, polyether sulfone, polyimide, polyethylene terephthalate, styrene-butadiene rubber, styrene-butyl acrylate copolymer, acrylic modified SBR resin, styrene-(meth) acrylate copolymer, polyvinyl alcohol, sodium polyacrylate, polyvinylidene fluoride, polyamideimide, chitosan, tetrafluoroethylene-perfluoroalkyl vinyl ether copolymer, vinyl acetate copolymer, cellulose acetate phthalate, hydroxypropyl methyl cellulose and polytetrafluoroethylene.

With continuous increase of the thickness of the first safety coating, the safety of the lithium-ion battery is continuously improved, but the energy density is reduced. Therefore, in order to take into account both the safety and energy density of the lithium-ion battery, the thickness of the first safety coating is less than or equal to the thickness of the second safety coating.

Further, the thickness of the first safety coating is 3-15µm.

It is known for a person skilled in the art that, compared with the first safety coating, the second safety coating needs to participate in the electrochemical reaction. Therefore, the second safety coating must include a conductive agent, and a content of the conductive agent therein should be greater than a content of the conductive agent in the first safety coating, that is, the first safety coating and the second safety coating have different materials and in the preparation process of the positive electrode plate, a first safety coating slurry, a positive-electrode active layer slurry and a second safety coating slurry need to be prepared separately and are respectively applied to different positions on a surface of the positive-electrode current collector. Therefore, in order to facilitate the preparation of the lithium-ion battery, a spacing can be set between the functional layer and the first safety coating. Specifically, a distance between the functional layer and the first safety coating is d, 0 ≤ d ≤ 10mm.

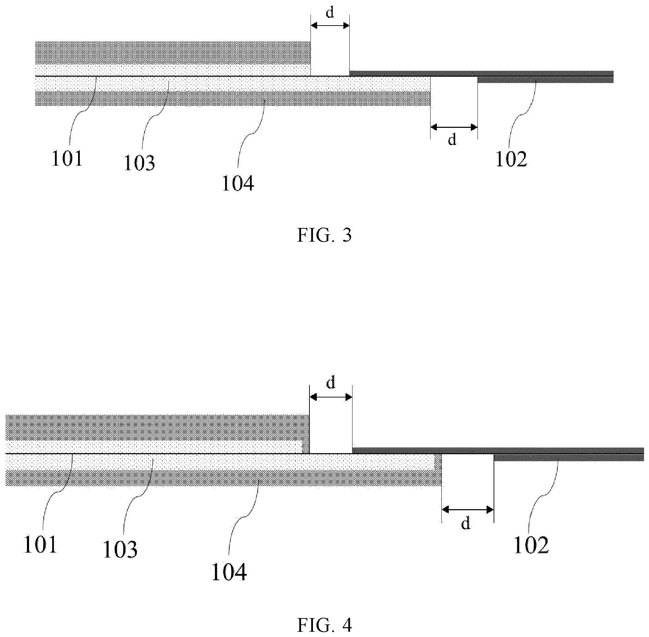

FIG. 3 is a schematic structural diagram of a positive electrode plate according to another example of the present application. As shown in FIG. 3, a spacing is provided between the second safety coating 103 and the positive-electrode active layer 104 on the upper or lower surface of the positive-electrode current collector 101 and the first safety coating 102, and a distance between the two is d. The distance d for the upper surface and the lower surface of the positive-electrode current collector 101 may be the same or different, and it can be set by a person skilled in the art according to actual needs.

In addition, it is known for a person skilled in the art that the surface of the positive-electrode current collector should be covered with the positive-electrode active layer as much as possible. Therefore, a length of the positive-electrode active layer is usually slightly larger than a length of the second safety coating, and thus the distance between the functional layer and the first safety coating is the distance between the positive-electrode active layer and the first safety coating. For example, FIG. 4 is a schematic structural diagram of a positive electrode plate according to another example of the present application. As shown in FIG. 4, the length of the positive-electrode active layer 104 is slightly greater than the length of the second safety coating 103, and the distance d between the functional layer and the first safety coating is also the distance between the positive-electrode active layer 104 and the first safety coating 102.

A person skilled in the art can prepare the positive electrode plate according to conventional technical means, and specifically, respectively prepare the first safety coating slurry, the positive-electrode active layer slurry and the second safety coating slurry, and respectively coat the above slurries on a positive-electrode current collector by one of gravure coating, extrusion coating, spraying and screen printing to prepare a positive electrode plate, where:
the positive-electrode current collector is an aluminum foil;
the second safety coating slurry includes a first active material, a binder and a conductive agent, where the first active material is one or more of lithium cobaltate, lithium manganate, lithium nickelate, lithium nickel cobalt manganese oxide, ferrous lithium phosphate, lithium ferromanganese phosphate, lithium vanadium phosphate, lithium oxyvanadium phosphate, lithium-rich manganese-based material, lithium nickel cobalt aluminate, and lithium titanate, D50 thereof is 0.6-1.8µm, and D90 thereof is 2-10µm;
the positive-electrode active layer slurry includes a second positive-electrode active material, a conductive agent and a binder, where the second active material is lithium cobaltate, lithium nickel cobalt manganese oxide, lithium nickel cobalt aluminate, lithium-rich manganese-based material, ferrous lithium phosphate, D50 thereof is 7-15µm, and D90 thereof is less than or equal to 25µm; and
the selection of the conductive agent and the binder is the same as the first safety coating.

The mass of the first active material in the second safety coating is 45-95% of the total mass of the second safety coating, and further 47-94%, the mass of the binder is 3-50% of the total mass of the second safety coating, and the mass of the conductive agent is 1-5% of the total mass of the second safety coating.

The mass of the second positive-electrode active material in the positive-electrode active layer is 93-98% of the total mass of the positive-electrode active layer, the mass of the binder is 1-3% of the total mass of the positive-electrode active layer, and the mass of the conductive agent is 0.5-2% of the total mass of the positive-electrode active layer.

The thickness of the second safety coating is 3-20µm; the thickness of the active material layer is 25µm or more.

In conclusion, the present application provides a positive electrode plate, which, by arranging the first safety coating on the surface of the positive-electrode current collector, can effectively prevent the positive-electrode current collector from contacting the negative-electrode active layer, increase the short-circuit internal resistance during the puncturing process, prevent the temperature from rising, and improve the puncture pass rate of the lithium-ion battery.

A second aspect of the present application provides a lithium-ion battery, and the lithium-ion battery includes any one of the above-mentioned negative electrode plates.

The present application provides a lithium-ion battery, and on the basis of the positive electrode plate provided by the present application, a wound cell is obtained in combination with a negative electrode plate and a separator by a winding process, and then the wound cell is packaged and subjected to liquid injection to obtain the lithium-ion battery. The lithium-ion battery provided by the present application has a good puncture pass rate.

In order to further improve the energy density of the lithium-ion battery, the length of the positive-electrode current collector that is not covered by the functional layer should be reduced as much as possible. Specifically, the length of the first safety coating covering the inner surface of the outermost positive-electrode current collector close to the winding center is less than or equal to 1/2 of the length of the outermost positive-electrode current collector.

Continuing to refer to FIG. 2, the upper surface and the lower surface of the positive-electrode current collector on the leftmost side of the lithium-ion battery are not covered by a functional layer, and thus the length of this portion of the positive-electrode current collector should be reduced as much as possible. Since the length of the first safety coating arranged on the inner surface of the outermost positive-electrode current collector close to the winding center is equal to the length of the positive-electrode current collector that is not covered by the functional layer, the length of the first safety coating arranged on the inner surface of the outermost positive-electrode current collector close to the winding center is less than 1/2 of the length of the outermost positive-electrode current collector.

In addition, it is known for a person skilled in the art that in order to increase the lithium storage amount of the negative electrode plate, the length of the negative electrode plate is greater than the length of the positive electrode plate. Therefore, vertical projections of the negative electrode plate and the first safety coating on the outermost positive electrode plate are necessarily partially overlapped. Specifically, an overlapping region of a portion of the negative electrode plate beyond the positive electrode plate and the vertical projection of the first safety coating on the outermost positive electrode plate is greater than or equal to 0.5µm.

Continue to refer to FIG. 2, the length of the negative electrode plate 200 is greater than the length of the positive electrode plate 100, and the portion of the negative electrode plate 200 beyond the positive electrode plate 100 (the portion in the dashed box of FIG. 2) overlaps the vertical projection of the first safety coating 102 on the outermost positive electrode plate, and the length of the overlapping region is greater than or equal to 0.5µm.

The implementation of the present application at least has the following advantages:
1. The positive electrode plate provided by the present application, by arranging a first safety coating on the surface of the positive-electrode current collector, can effectively prevent the positive-electrode current collector from being in contact with the negative-electrode active layer, increase the short-circuit internal resistance in the puncturing process, prevent the temperature from rising, and improve the puncture pass rate of the lithium-ion battery.
2. By adding a filler in the first safety coating, it is possible to further improve the drop pass rate of the lithium-ion battery and improve the safety of the lithium-ion battery.
3. By adding a conductive agent in the first safety coating, it is helpful to prevent the accumulation of the internal temperature of the lithium-ion battery, and improve the safety of the lithium-ion battery.
4. The lithium-ion battery provided in the present application has a good puncture pass rate.

### BRIEF DESCRIPTION OF DRAWINGS

FIG. 1 is a schematic structural diagram of a positive electrode plate according to an example of the present application;

FIG. 2 is a schematic structural diagram of a lithium-ion battery according to an example of the present application;

FIG. 3 is a schematic structural diagram of a positive electrode plate according to another example of this application;

FIG. 4 is a schematic structural diagram of a positive electrode plate according to still another example of this application.

Brief description of the reference signs:
100-positive electrode plate;
200-negative electrode plate;
300-positive electrode tab;
400-negative electrode tab;
101-positive-electrode current collector;
102-a fist safety coating;
103-a second safety coating; and
104-positive-electrode active layer.

### DESCRIPTION OF EMBODIMENTS

In order to make the objects, technical solutions, and advantages of the present application clearer, the technical solutions in the examples of the present application will be clearly and completely described below in conjunction with the examples of the present application. Obviously, the described examples are part of the examples of the present application, rather than all of the examples. All other examples obtained by a person of ordinary skill in the art based on the examples of the present application without creative efforts shall fall within the protection scope of the present application.

The materials used in the following examples are commercially available.

### Example 1

The positive electrode plate provided by the present example has a structure shown in FIG. 1, and includes an aluminum foil as positive-electrode current collector, a first safety coating, a positive-electrode active layer and a second safety coating, and specifically:
the first safety coating includes 90 parts by mass of aluminum oxide (Al₂O₃) and 10 parts by mass of polyvinylidene fluoride (PVDF), where D10 of aluminum oxide (Al₂O₃) is 0.15µm, D50 thereof is 0.32µm, D90 thereof is 0.65µm, and a specific surface area thereof is 15.6 m²/g; a single-sided thickness of the first safety coating is 5µm;
the second safety coating includes 65 parts by mass of ferrous lithium phosphate, 30 parts by mass of polyvinylidene fluoride and 5 parts by mass of carbon black, where D50 of ferrous lithium phosphate is 0.75µm, D90 thereof is 25µm, and a thickness thereof is 8µm;
the positive-electrode active layer includes 97 parts by mass of lithium cobaltate, 1.3 parts by mass of polyvinylidene fluoride and 1.7 parts by mass of carbon black, where D50 of lithium cobaltate is 10µm, D90 thereof is 25µm, and a thickness thereof is 95µm.

A preparation method of the positive electrode plate provided by the example includes the following steps:
1. dissolving 90 parts by mass of aluminum oxide (Al₂O₃) and 10 parts by mass of polyvinylidene fluoride (PVDF) in NMP, and uniformly mixing to obtain a first safety coating slurry (solid content is 32.5%);
   coating the first safety coating slurry on first coating areas of an upper surface and a lower surface of the aluminum foil by a gravure coating machine, and drying at 110°C to obtain the first safety coating;
2. dissolving 65 parts by mass of ferrous lithium phosphate, 30 parts by mass of polyvinylidene fluoride and 5 parts by mass of carbon black in NMP, and uniformly mixing to obtain a second safety coating slurry (solid content is 15%);
   coating the second safety coating slurry on second coating areas of the upper surface and the lower surface of the aluminum foil by a gravure coating machine, and drying at 110°C to obtain the second safety coating;
3. dissolving 97 parts by mass of lithium cobaltate, 1.3 parts by mass of polyvinylidene fluoride and 1.7 parts by mass of carbon black in NMP, and uniformly mixing to form a positive-electrode active layer slurry (solid content being 75%);
   coating the positive-electrode active layer slurry on a surface of the second safety coating by a slit-extrusion coating device, and after drying at 100°C, rolling and cutting to obtain a positive electrode plate of 1000mm x 65mm.

### Example 2

The positive electrode plate provided in this example may refer to Example 1, except that:
the first safety coating includes 80 parts by mass of aluminum oxide (Al₂O₃), 10 parts by mass of LiFePO₄ and 10 parts by mass of polyvinylidene fluoride (PVDF); and
D10 of LiFePO₄ is 0.37µm, D50 is 0.75µm, D90 is 2.30µm, and a specific surface area is 10 m²/g.

### Example 3

The positive electrode plate provided in this example may refer to Example 2, except that:
the first safety coating includes 70 parts by mass of aluminum oxide (Al₂O₃), 20 parts by mass of LiFePO₄ and 10 parts by mass of polyvinylidene fluoride (PVDF).

### Example 4

The positive electrode plate provided in this example may refer to Example 2, except that:
the first safety coating includes 60 parts by mass of aluminum oxide (Al₂O₃), 30 parts by mass of LiFePO₄ and 10 parts by mass of polyvinylidene fluoride (PVDF).

### Example 5

The positive electrode plate provided in this example may refer to Example 1, except that:
the first safety coating includes 85 parts by mass of aluminum oxide (Al₂O₃), 5 parts by mass of aluminum fiber and 10 parts by mass of polyvinylidene fluoride (PVDF); and
a diameter of the aluminum fiber is 2µm, and a length thereof is 15µm.

### Example 6

The positive electrode plate provided in this example may refer to Example 1, except that:
the first safety coating includes 85 parts by mass of aluminum oxide (Al₂O₃), 5 parts by mass of aluminum silicate fiber and 10 parts by mass of polyvinylidene fluoride (PVDF); and
a diameter of the aluminum silicate fiber is 2µm, and a length thereof is 15µm.

### Example 7

The positive electrode plate provided in this example may refer to Example 2, except that:
the first safety coating includes 80 parts by mass of aluminum oxide (Al₂O₃), 10 parts by mass of LiFePO₄, 1.5 parts by mass of carbon black as conductive agent and 8.5 parts by mass of polyvinylidene fluoride (PVDF).

### Example 8

The positive electrode plate provided in this example may refer to Example 2, except that:
the first safety coating includes 80 parts by mass of aluminum oxide (Al₂O₃), 10 parts by mass of LiFePO₄, 2.5 parts by mass of carbon black as conductive agent and 7.5 parts by mass of polyvinylidene fluoride (PVDF).

### Example 9

The positive electrode plate provided in this example may refer to Example 1, except that:
the first safety coating includes 78 parts by mass of aluminum oxide (Al₂O₃), 2.5 parts by mass of carbon black as conductive agent and 19.5 parts by mass of polyvinylidene fluoride (PVDF).

### Example 10

The positive electrode plate provided in this example may refer to Example 1, except that:
the first safety coating includes 75.5 parts by mass of aluminum oxide (Al₂O₃), 5 parts by mass of carbon black as conductive agent and 19.5 parts by mass of polyvinylidene fluoride (PVDF).

### Example 11

The positive electrode plate provided in this example may refer to Example 1, except that:
the first safety coating includes 70.5 parts by mass of aluminum oxide (Al₂O₃), 10 parts by mass of carbon black as conductive agent and 19.5 parts by mass of polyvinylidene fluoride (PVDF).

### Example 12

The positive electrode plate provided in this example may refer to Example 1, except that:
the first safety coating includes 65.5 parts by mass of aluminum oxide (Al₂O₃), 15 parts by mass of carbon black as conductive agent and 19.5 parts by mass of polyvinylidene fluoride (PVDF).

### Example 13

The positive electrode plate provided in this example may refer to Example 1, except that:
the first safety coating includes 60.5 parts by mass of aluminum oxide (Al₂O₃), 20 parts by mass of carbon black as conductive agent and 19.5 parts by mass of polyvinylidene fluoride (PVDF).

### Example 14

The positive electrode plate provided in this example may refer to Example 1, except that:
the first safety coating includes 50.5 parts by mass of aluminum oxide (Al₂O₃), 30 parts by mass of carbon black as conductive agent and 19.5 parts by mass of polyvinylidene fluoride (PVDF).

### Example 15

The positive electrode plate provided in this example may refer to Example 1, except that:
the first safety coating includes 79.5 parts by mass of aluminum oxide (Al₂O₃), 1 part by mass of carbon black as conductive agent and 19.5 parts by mass of polyvinylidene fluoride (PVDF).

### Example 16

The positive electrode plate provided in this example may refer to Example 1, except that:
the first safety coating includes 79.65 parts by mass of aluminum oxide (Al₂O₃), 0.85 part by mass of carbon black as conductive agent and 19.5 parts by mass of polyvinylidene fluoride (PVDF).

### Example 17

The positive electrode plate provided in this example may refer to Example 1, except that:
the first safety coating includes 79.85 parts by mass of aluminum oxide (Al₂O₃), 0.65 part by mass of carbon black as conductive agent and 19.5 parts by mass of polyvinylidene fluoride (PVDF).

### Example 18

The positive electrode plate provided in this example may refer to Example 1, except that:
the first safety coating includes 80 parts by mass of aluminum oxide (Al₂O₃), 0.5 part by mass of carbon black as conductive agent and 19.5 parts by mass of polyvinylidene fluoride (PVDF).

### Comparative Example 1

The positive electrode plate provided by the present comparative example includes a positive-electrode current collector, a second safety coating and a positive-electrode active layer, namely, it does not include a first safety coating.

Lithium-ion batteries were prepared by a winding process using the positive electrode plates provided by Examples 1-18 and Comparative Example 1 in combination with negative electrode plates and separators, and the lithium-ion batteries were subjected to safety test. The test results are shown in Table 1:
where a preparation method of the negative electrode plate includes: dissolving 95 parts by mass of graphite, 1.5 parts by mass of CMC, 1.5 parts by mass of SBR and 2 parts by mass of carbon black in deionized water, and uniformly mixing to obtain a negative-electrode active layer slurry; coating the slurry on the upper surface and the lower surface of a copper foil, and after drying at 70-100°C for 2-5 minutes, rolling and cutting, to obtain a negative electrode plate of 1100mm x 66.5mm, where a single-sided thickness of the negative-electrode active layer is 120µm.
(1) Method for puncture test, including: under an environment of normal temperature, charging a lithium-ion battery at a constant current of 0.5C until the voltage is 4.35V, and then performing constant voltage charging until the current is 0.025C; transferring the lithium-ion battery to a nail penetration test device, maintaining the temperature of the test environment to be 25°C, and puncturing a negative-electrode-tab side at a position of 7 mm away from the battery cell with a steel nail of 4 mm in diameter at a constant speed of 30 mm/s; keeping for 300s, and if the lithium-ion battery does not catch fire or explode, recording it as passing.
   For each example/comparative example, 10 pieces are tested, where puncture test pass rate = the number of batteries passing puncture test /total number of batteries in puncture test.
(2) Method for testing volume resistance, including: testing a total volume resistance of the first safety coating and the positive-electrode current collector by using a diaphragm resistance test system with device model ACCFILM, where diameter D of the test probe is 14 mm; during the test, placing the positive electrode plate between upper and lower cylindrical probes, adjusting a pressure to be 0.4 MPa, starting a test switch, and recording the test data; testing 10 data points for each group with the testing points spacing being 5 mm, and taking an average value as the value of the volume resistance. The resistance measurement precision of the test system is 0.1µΩ-100mΩ, and the resistance measurement range is 0.1µΩ-3000Ω.
(3) Method for testing peel strength between first safety coating and fixing adhesive tape, including: cutting the positive electrode plate into small positive electrode plate piece with length of 240 mm and width of 30 mm, using an adhesive tape NITTO No. 5000NS and cutting the adhesive tape into small adhesive tape piece according to specification of length 200 mm and width 24 mm, adhering one side of small adhesive tape piece to a steel plate (260 mm^{∗}50 mm), and bonding the other side of the small adhesive tape piece with the small positive electrode plate piece, ensuring that the small positive electrode plate piece completely covers the small adhesive tape piece; rolling a hand-held drum (diameter 95 mm, width 45 mm, and weight 2 kg) back and forth for 3 times to bond the small positive electrode plate piece and the small adhesive tape piece together, then using a tensile machine (the tensile machine model being KJ-1065 series of Dongguan Kejian Instrument) to test (180 degree peeling), and then at a speed of 10 mm/min, the test device automatically recording a tensile force value that changes with the peeling displacement; taking the peeling displacement as the abscissa and the tensile force value as the ordinate to draw a curve of the tensile force value changing with the peeling displacement, and taking the tensile force value when the curve flattens and the peeling displacement is greater than 5mm as the peel strength.

### (4) Drop test

Placing a lithium-ion battery in a clamp to carry out surface drop, edge drop and point drop tests according to the national standard GB/T 18287-2000, where the test distance is 1.2 m, and free drop is conducted for one time in each of six directions in three-dimension.

For each example/comparative example, 10 pieces are tested, where drop test pass rate = the number of batteries passing drop test/total number of batteries in drop test

### (5) Thermal-abuse pass rate

Putting fully charged battery cells into a test box, increasing the temperature in the test box at a rate of (5±2)°C/min, and after the temperature reaches 130±2°C, keeping this temperature for 1 hour, and then observing whether the lithium-ion battery has the problems of catching fire and exploding, and if no fire and explosion occur it passes the test.

Table 1 Test results of lithium-ion batteries provided according to Examples 1-18 and Comparative Example 1

| | Component of first safety coating | Peel strength between first safety coating (current collector) and adhesive tape (N/m) | Puncture pass rate (%) | Volume resistance (mΩ) | Drop pass rate (%) | Thermal-abuse test |
|---|---|---|---|---|---|---|
| Example 1 | Al₂O₃:PVDF=90:10 | 15.62 | 100 | Infinity | 70 | Failed |
| Example 2 | Al₂O₃: LiFePO₄:PVDF =80:10:10 | 19.59 | 100 | 305 | 90 | Failed |
| Example 3 | Al₂O₃: LiFePO₄:PVDF =70:20:10 | 26.24 | 70 | 582 | 95 | Failed |
| Example 4 | Al₂O₃: LiFePO₄:PVDF =60:30:10 | 28.91 | 65 | 60 | 100 | Failed |
| Example 5 | Al₂O₃: Al fiber :PVDF =85:5:10 | 28.92 | 70 | 126 | 100 | Failed |

| | | | | | | |
|---|---|---|---|---|---|---|
| Example 6 | Al₂O₃: Aluminosilicate fiber :PVDF =85:5:10 | 28.97 | 100 | 8365 | 100 | Failed |
| Example 7 | Al₂O₃: LiFePO₄:SP:PVDF =80:10:1.5:8.5 | 28.21 | 100 | 684 | 100 | Passing |
| Example 8 | Al₂O₃: LiFePO₄:SP:PVDF =80:10:2.5:7.5 | 28.53 | 80 | 539 | 100 | Passing |
| Example 9 | AL₂O₃:SP:PVDF =78: 2.5:19.5 | 28.69 | 100 | 731 | 100 | Passing |
| Example 10 | AL₂O₃:SP:PVDF =75.5: 5: 19.5 | 28.32 | 100 | 510 | 100 | Passing |
| Example 11 | AL₂O₃:SP:PVDF =70.5: 10: 19.5 | 28.16 | 100 | 204 | 100 | Passing |
| Example 12 | AL₂O₃:SP:PVDF =65.5: 15: 19.5 | 27.91 | 68 | 85.1 | 100 | Passing |
| Example 13 | AL₂O₃:SP:PVDF =60.5: 20: 19.5 | 27.29 | 46 | 18.2 | 100 | Passing |
| Example 14 | AL₂O₃:SP:PVDF =50.5: 30: 19.5 | 26.82 | 35 | 10.6 | 97 | Passing |
| Example 15 | AL₂O₃:SP:PVDF =79.5: 1.0: 19.5 | 28.33 | 100 | 1560 | 100 | Passing |
| Example 16 | AL₂O₃:SP:PVDF =79.65: 0.85: 19.5 | 28.81 | 100 | 2104 | 100 | Passing |
| Example 17 | AL₂O₃:SP:PVDF =79.85: 0.65: 19.5 | 28.69 | 100 | 2261 | 100 | Passing |
| Example 18 | AL₂O₃:SP:PVDF =80: 0.5: 19.5 | 28.69 | 100 | 3164 | 100 | Passing |
| Comparative Example 1 | / | 29.13 | 50 | 3 | 100 | Failed |

According to the data provided in Table 1, it can be seen that the volume resistance and puncture pass rate of the lithium-ion batteries provided in Examples 1-8 are greater than those of Comparative Example 1. Therefore, providing the first safety coating is beneficial to improve the puncture pass rate of the lithium-ion battery. According to Example 1 and Example 2-4, it can be known that the inclusion of a particulate filler in the first safety coating is beneficial to improve the peel force between the first safety coating and the adhesive tape, thereby improving the drop pass rate of the lithium-ion battery; however, as the mass fraction of the particulate filler increases, the puncture pass rate of the lithium-ion battery decreases, and therefore, when the mass fraction of the particulate filler is 10%, the comprehensive safety of the lithium-ion battery is good. According to the Examples 5-6, it can be known that the peel force between the first safety coating and the adhesive tape is improved after a fiber filler is used, but the puncture pass rate of the lithium-ion battery is reduced due to that the aluminum fiber is pure conductive; whereas an aluminum silicate fiber has relatively good puncture pass rate due to its good electrical insulation property and large volume resistance. According to Examples 7-8, it can be known that adding an appropriate amount of conductive agent to the first safety coating is also beneficial to prevent the accumulation of the internal temperature of the lithium-ion battery, improving the safety of the lithium-ion battery. According to Examples 9-18, it can be known that when a conductive agent is included in the first safety coating, the content of the conductive agent should be controlled, and the total volume resistance of the current collector and the first safety coating should be controlled at 20-3500 mΩ.

Finally, it should be noted that the above examples are only used to illustrate the technical solutions of the present application, and are not limited thereto; although the present application has been described in detail with reference to the foregoing examples, it should be understood by those of ordinary skill in the art that they may still modify the technical solutions described in the foregoing examples, or equivalently substitute some or all of the technical features therein; however, these modifications or substitutions do not make the essence of the corresponding technical solutions depart from the scope of the technical solutions of the examples in the present application.

## Claims

1. A positive electrode plate, wherein the positive electrode plate comprises a positive-electrode current collector, a functional layer, and a first safety coating;
wherein both an upper surface and a lower surface of the positive-electrode current collector comprise a first coating area and a second coating area, and the first coating area is provided with the first safety coating; the second coating area is provided with the functional layer, and the functional layer sequentially comprises a second safety coating and a positive-electrode active layer in a direction away from the positive-electrode current collector.

2. The positive electrode plate according to claim 1, wherein the first safety coating comprises an inorganic particle, and the inorganic particle is one or more of CuO, Gd₂O, Lu₂O₃, Sm₂O₃, NiO, SiO₂, Al₂O₃, TiO₂, WO₃, ZnO, Ag₂Se, MoS₂, ZrO₂, Y₂O₃, SiC, CeO₂, SnO₂, Al₂O₃/Ag/ZnO, Al₂O₃/CdS, Al₂O₃/MgO, Al₂O₃/ZnO, Al(OH)₃, Mg(OH)₂, Ca(OH)₂, Ba₂SO4, and γ-AlOOH.

3. The positive electrode plate according to claim 1 or 2, wherein the first safety coating comprises a filler, the filler is one or more of lithium cobaltate, lithium manganate, lithium nickellate, lithium nickel cobalt manganese oxide, ferrous lithium phosphate, lithium ferromanganese phosphate, lithium vanadium phosphate, lithium oxyvanadium phosphate, lithium-rich manganese-based material, lithium nickel cobalt aluminate, lithium titanate, aluminum fiber and aluminum silicate fiber, and a mass of the filler is not greater than 40% of a mass of the first safety coating.

4. The positive electrode plate according to claim 3, wherein D10 of lithium cobaltate, lithium manganate, lithium nickelate, lithium nickel cobalt manganese oxide, ferrous lithium phosphate, lithium ferromanganese phosphate, lithium vanadium phosphate, lithium oxyvanadium phosphate, lithium-rich manganese-based material, lithium nickel cobalt aluminate, and lithium titanate is 0.01-0.5µm, D10 thereof is 0.02-1.5µm, D90 thereof is 1.6-4.0µm, and a specific surface area thereof is 0.1-15 m²/g; and the aluminum fiber and the aluminum silicate fiber have a diameter of 0.1-3µm and a length of 1-20µm.

5. The positive electrode plate according to any one of claims 1-4, wherein the first safety coating further comprises a conductive agent, and a total volume resistance of the first safety coating and the positive-electrode current collector is 10-3500mQ.

6. The positive electrode plate according to claim 1, wherein a thickness of the first safety coating is less than or equal to a thickness of the second safety coating.

7. The positive electrode plate according to claim 6, wherein the thickness of the first safety coating is 3-15µm.

8. A lithium-ion battery, wherein the lithium-ion battery comprises the positive electrode plate according to any one of claims 1-7.

9. The lithium-ion battery according to claim 8, wherein a length of the first safety coating covering an inner surface of an outermost positive-electrode current collector close to a winding center is less than or equal to 1/2 of a length of the outermost positive-electrode current collector.

10. The lithium-ion battery according to claim 8 or 9, wherein a length of a negative electrode plate is greater than a length of the positive electrode plate, and a length of an overlapping region of a portion of the negative electrode plate beyond the positive electrode plate and a vertical projection of the first safety coating on an outermost positive electrode plate is greater than or equal to 0.5µm.
